Europäisches Patentamt

European Patent Office

Office européen des brevets

(19)

(11) Publication number: **0 055 879**
**B1**

(12) **EUROPEAN PATENT SPECIFICATION**

(45) Date of publication of patent specification: 27.08.86

(21) Application number: **81201380.3**

(22) Date of filing: **15.12.81**

(51) Int. Cl.⁴: **B 65 G 19/14,** B 65 G 19/24, B 65 G 67/60

(54) Conveyor consisting of a cable having entraining members.

(30) Priority: **29.12.80 NL 8007076**

(43) Date of publication of application:
**14.07.82 Bulletin 82/28**

(45) Publication of the grant of the patent:
**27.08.86 Bulletin 86/35**

(84) Designated Contracting States:
**BE DE FR GB IT NL**

(56) References cited:
**DE-C- 282 119**
**FR-A-2 241 479**
**FR-A-2 269 467**
**FR-A-2 293 856**
**FR-A-2 354 944**
**US-A-2 765 753**
**US-A-3 139 175**

(73) Proprietor: **Spaans, Cornelis**
**Hendrik Marsmanlaan 25**
**NL-2624 TJ Delft (NL)**

(72) Inventor: **Spaans, Cornelis**
**Hendrik Marsmanlaan 25**
**NL-2624 TJ Delft (NL)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

Courier Press, Leamington Spa, England.

## Description

The invention relates to a conveyor for bulk goods comprising an endless flexible cable having fixed thereon entraining members, a driving pulley and at least one return pulley, which pulleys are implemented as cable pulleys having a continuous circumferential groove, and a tubular and/or trough-shaped enclosure within which the entraining members can be advanced by the cable in fitting but free relation, which entraining members are each provided with a straight radial slot extending from the fixing location at which they are fixed to the cable, which slot has a slightly larger width than the thickness of the cable pulleys.

Such a conveyor is known from German patent Specification 282,119 and can be used for many applications such as unloading ships.

In this patent specification it is not indicated how the entraining members must be fixed to the cable.

No further solution is given for the problem resulting from a too much curved cable at the fixing place of the entraining member to the cable when running over the cable pulleys.

A strong connection between entraining member and cable is impossible with an infinite small or very small fixing member, but this member must have a certain length and thickness so that during running of said member over the cable pulleys on that place in the cable inadmissible high bendings may occur.

The invention has the object to avoid this and according to the invention this is obtained in that the cable over the whole length is provided with adjacent sleeve members connected fixedly to the cable, predetermined ones of said sleeve, members each being provided with one of said entraining members each being fixed by and axially nondisplaceable relative to the associated sleeve member and that the continuous circumferential groove of the cable pulleys is adapted to the external form of the sleeve members and the internal form of the sleeve members is such that when the cable with sleeve members is running over a cable pulley the cable without kinking cannot be bent further than a constant radius which is equal to the radius of the bottom of the circumferential groove in the cable pulleys plus the largest web thickness of the sleeve member at the place at which the respective entraining member is fixed.

By the special form of the sleeve members it is also reached that the cable with the sleeve members is running on and from the cable pulley without impacts and that the velocity of the cable is nearly proportional to the angular velocity of the cable pulleys.

It is noted that a conveyor having sleeve members fixed on a cable, which members have a bore in form of a body of revolution is known from FR—U—2,296,856. Typically, this is a conveyor in which the driving pulley is provided with recesses in which the sleeve members and the entraining members fixed thereto find a seat. Therein, the members do not engage in a continuous cable pulley.

A conveyor with continuous, solid pulleys without recesses is also known from US—A—2,765,753. However, this conveyor does not use entraining members provided with a slot.

Further the sleeve members are not arranged in a continuous row, so that the cable will be bent over different angles and will run with different radii of curvature. Also within the sleeve members the cable is bent over different angles and will run over different radii of curvature. This will have detrimental effect on the life of the cable.

According to the invention it is further possible that adjacent to the return pulley being at the lower end two further conveyors of the same type are provided, the shafts of the upper pulleys of which are coupled to the shaft of said return pulley, with two further conveyors inclined in opposite direction with respect to the axis of the first conveyor, which inclination is adjustable, in which adjacent to the return pulleys located at the lower end of the further conveyors two screw conveyors having left- and right-hand pitch or other digging apparatus operating in opposite direction are provided.

By said features the digging forces in the bulk goods are only small because they are nearly only under strain of shear and practically not under strain of pressure. The digging process is approximately symmetrical so that all forces and moments resulting from digging are balanced nearly internally.

The invention will be explained in details by reference to the drawing in which a number of embodiments are shown.

Fig. 1 is a schematical front view of the conveyor according to the invention having digging screws at the lower end,

Fig. 2 is a schematical side view of the same conveyor,

Fig. 3 is a cross-section on enlarged scale through an upper portion of the conveyor according to the invention in a plane of the cable,

Fig. 4 is a cross-section along the line IV—IV of Fig. 3,

Fig. 5 is a schematical front view of the lower end of a conveyor according to the invention equipped as digging apparatus having further conveyors.

Fig. 6 is a bottom view of Fig. 5 and

Fig. 7 shows the conveyor according to Fig. 5 and 6 used as unloading apparatus for a ship's hold.

Basically, the conveyor according to the invention comprises a flat upper driving pulley 1, a flat lower return pulley 2, an endless cable 3, disk-shaped entraining members 4 and a tubular enclosure 5.

The driving motor, not shown, is coupled to the shaft of the driving pulley 1 by which the disk-shaped entraining members 4 are entrained by cable 3 and convey upwards the bulk goods thereon indicated by 6 through the right-hand tube of the enclosure 5 to a discharge 7.

This is the general principle of such a conveyor.

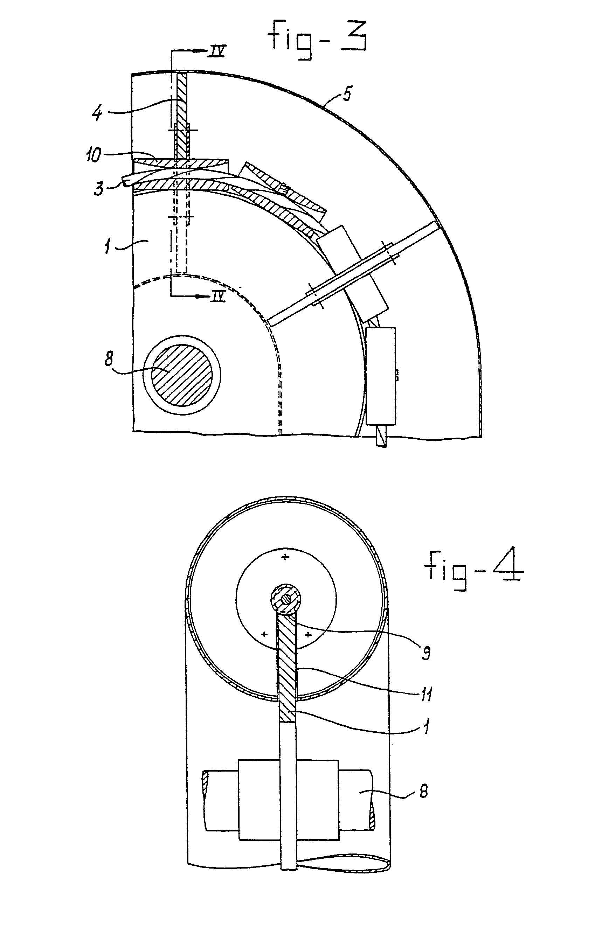

In Fig. 3 and 4 the upper driving pulley 1 is shown enlarged and in more details.

The driving pulley 1 of the conveyor according to the invention is a flat pulley, fixed on a shaft 8 which can be driven by a motor, not shown, frequently through a reduction gear.

The flat driving pulley 1 is provided with a continuous circumferential groove 9 as each normal cable pulley. This is also true for the return pulley 2. The pulleys 3 are continuous solid pulleys without recesses. A nestless pulley is provided with a continuous circumferential groove. For instance FR—U—2,293,856 relates to a conveyor with pulleys provided with recesses or nests.

The cable 3 is provided with elongated cylindrical sleeve members 10 clamped adjacent each other on the cable 3 or fixed thereon in another way. On predetermined sleeve members 10 the entraining disks 4 are mounted axially nondisplaceable.

From Fig. 3 and 4 it appears that the circumferential groove 9 is adapted to the diameter of the sleeve members 10.

The continuous aperture in each sleeve member 10 is in the form of a body of revolution in which the description line is a circle arc and the axis of the sleeve member 10 is the axis of the body of revolution.

The radius of the circle arc is equal to the radius of the bottom of the groove 9 plus the largest web thickness of the sleeve member 10 thus in its center. In this way the cable 3 is kinked nowhere.

From Fig. 3 it appears that alternatingly a sleeve member 10 is provided with an entraining member 4.

Also another arrangement is conceivable and the arrangement can also be modified without objection, because the pulleys 1 and 2 are continuous solid pulleys without recesses. With a pulley with nests the place of the entraining members is determined by the recesses in the pulleys.

Each entraining member 4 is provided with a radial slot 11, see Fig. 4. When the entraining members 4 pass the pulley 1 or 2 the slots 11 run over the pulleys 1 and 2.

One can also provide longer or shorter sleeve members 10 and connect the entraining members 4 to each arbitrary sleeve member.

It is also not necessary to arrange the pulleys 1 and 2 in one and the same plane. They can cross each other or lie in another parallel plane. It is readily apparent that the shape of the enclosure 5 should be adapted thereto.

Otherwise, said enclosure 5 needs not to be a closed tube.

In conveying in a horizontal or slightly inclining plane the conveying portion of the enclosure may be trough opened upwards. Even, the return portion of the enclosure may lack entirely.

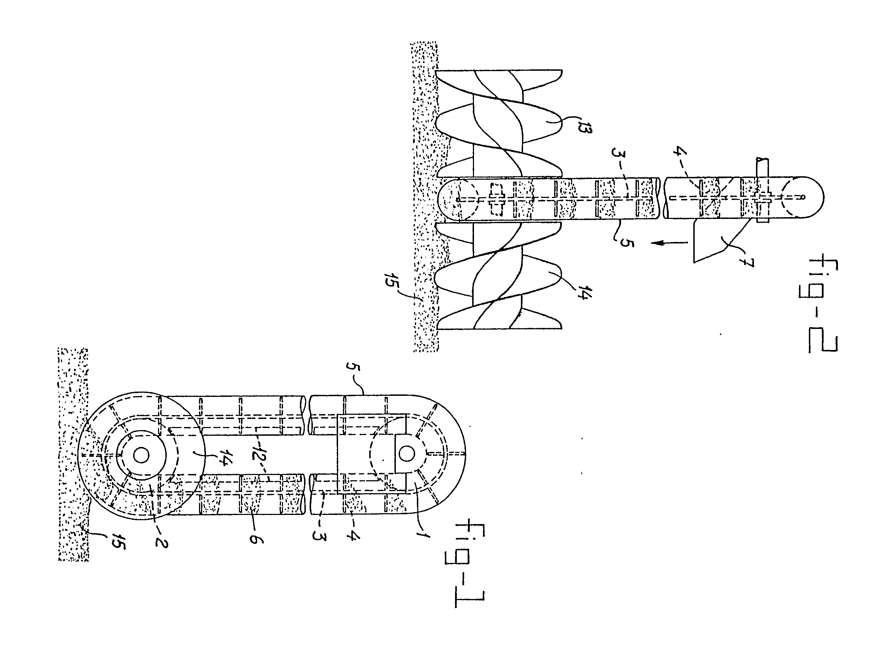

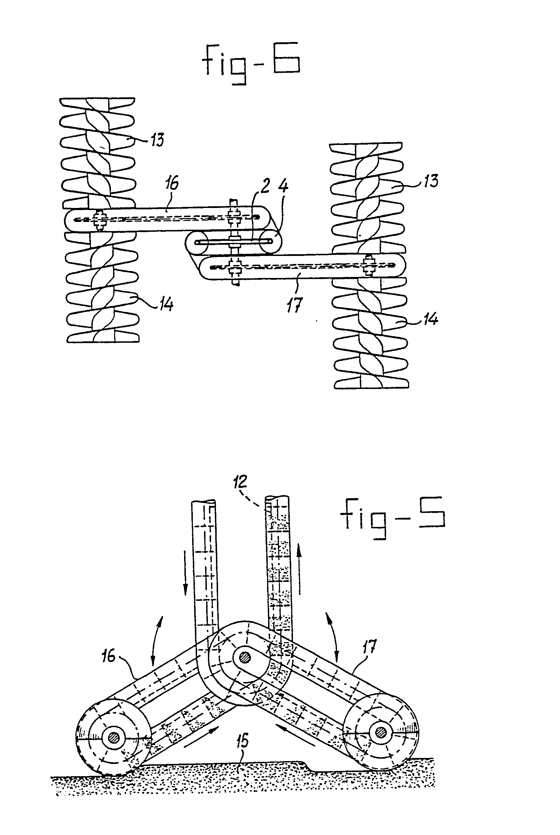

Insofar as circular entraining members are concerned, such as those known from DE—C—282,119, care should be taken that each entraining member 4 arrives in a correct rotational position at the pulleys 1 and 2. Therefore, it is necessary to guide the entraining members 4 in rotational direction over the entire traject. For example this can be accomplished by fixing a strip 12 against the inner side of the enclosure 5, see Fig. 1 and 5. Said strip 12 fits in the end of each slot 11 and is so designed that each slot 11 comes into the planes of the pulleys 1 and 2 also if said planes are not the same. At non-circular entraining members these strips 12 are superfluous.

In Fig. 1 and 2 the conveyor is implemented as self-filling apparatus. Thereby, at both sides of the shaft of the return pulley 2 screw conveyors 13 and 14 are mounted having opposite pitches. Thus, the bulk goods 15 to be picked up is conveyed by screws 13 and 14 to the apertures in the enclosure 5 after which the bulk goods are transported upwards by the entraining members 4.

By the screws 13 and 14 having opposite pitches the lower end of the conveyor is maintained in its position.

The screws 13 and 14 are driven from the pulley 1 through the cable 3 so that beneath no motor or the like needs to be arranged.

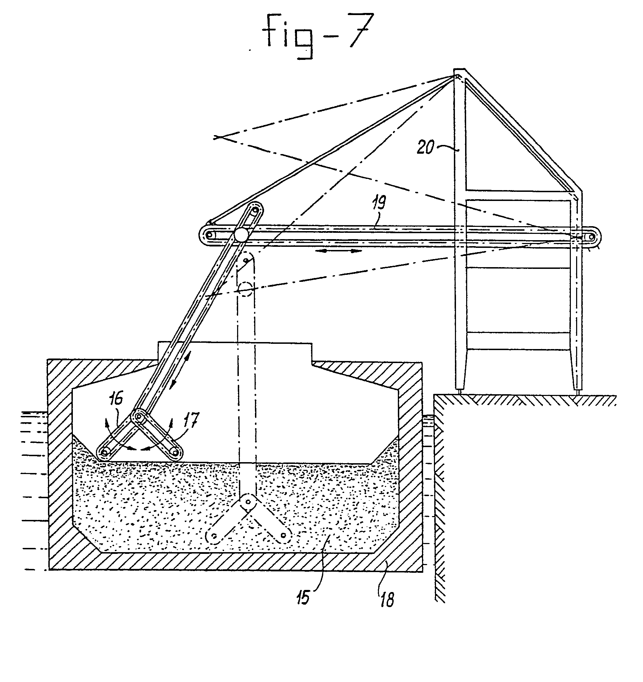

In the embodiment according to Fig. 5 and 6 further similar conveyors 16 and 17 are connected between the screws.

When said further conveyor 16 and 17 are journalled around the axis of the pulley 2 of the main conveyor as indicated by arrows, the material 16 may be digged away without having the main conveyor itself descend.

Fig. 7 shows the conveyor according to fig. 5 and 6 as used for unloading a ship 18.

A conveyor is hanging from a conveyor 19 of arbitrary type extending nearly horizontally and in its turn hangs from the mobile supporting construction 20. By descending the left-hand end of the conveyor 19 the digging depth into the ship 20 is varied. By journalling the conveyors 16 and 17 in opposite direction each corner of the ship 18 can be reached.

**Claims**

1. Conveyor for bulk goods comprising an endless flexible cable (3) having fixed thereon entraining members (4), a driving pulley (1) and at least one return pulley (2), which pulleys (1, 2) are implemented as cable pulleys having a continuous circumferential groove (9), and a tubular and/or trough-shaped enclosure (5) within which the entraining member (4) can be advanced by the cable (3) in fitting but free relation, which entraining members (4) are each provided with a straight radial slot (11) extending from the location at which they are fixed to the cable (3), which slot (11) has a slightly larger width than the thickness of the cable pulleys (1, 2), characterized in that the cable (3) over the whole length is provided with adjacent sleeve members (10) connected fixedly to the cable (3), predetermined ones of said sleeve members (10) each being provided with one of said entraining members (4), each being fixedly connected and axially nondisplaceable relative to the associated sleeve member (10) and that the continuous circumferential groove (9) of the cable pulleys (1, 2) is adapted to the external form of the sleeve members (10) and the internal form of the sleeve members (10) is such that when the cable (3) with sleeve members (10) is running over a cable pulley (1, 2) the cable (3) without kinking cannot be bent further than a constant radius which is equal to the radius of the bottom of the circumferential groove in the cable pulleys plus the largest web thickness of the sleeve member (10) at the place at which the respective entraining member is fixed.

2. Conveyor according to claim 1, in which the lower end of the conveyor is arranged for supplying the bulk goods, for which the enclosure (5) is provided with access apertures for the bulk goods, characterized in that adjacent to the return pulley (2) located at the lower end two further conveyors (16, 17) of similar type are provided, the shafts of the upper pulleys of which being coupled to the shaft of said return pulley (2), with two further conveyors (16, 17) inclined in opposite direction with respect to the axis of the first mentioned conveyor, which inclination is adjustable, in which adjacent to the return pulleys of the further conveyors located at the lower end two screw conveyors (13, 14) having left- and right-hand pitches, or other digging apparatus operating in opposite direction are provided.

## Patentansprüche

1. Förderer für Schüttgüter mit einem endlosen, biegsamen Kabel (3) mit daran befestigten Mitnahmegliedern (4), einer Antriebsrolle (1) und wenigstens einer Rücklaufrolle (2), wobei die Rollen (1, 2) als Kabelrollen mit einer kontinuierlichen Umfangsrille (9) ausgebildet sind, und einer rohrförmigen und/oder trogförmigen Verkleidung (5), innerhalb derer das Mitnahmeglied (4) mittels des Kabels (3) in passendem, aber freiem Verhältnis vorwärtsbewegt werden kann, wobei die Mitnahmeglieder (4) jeweils mit einem geradlinigen, radialen Schlitz (11) versehen sind, der sich von der Stelle aus erstreckt, an der sie am Kabel (3) befestigt sind, welcher Schlitz (11) eine Breite aufweist, die etwas größer ist als die Dicke der Kabelrollen (1, 2), dadurch gekennzeichnet, daß das Kabel (3) über die Gesamtlänge mit nebeneinander angeordneten Hülsengliedern (10) versehen ist, die fest mit dem Kabel (3) verbunden sind, wobei vorbestimmte Hülsenglieder (10) jeweils mit einem der genannten Mitnahmeglieder (4) versehen sind, deren jedes fest mit dem zugeordneten Hülsenglied (10) verbunden und relativ zu diesem axial nicht verschiebbar ist, und daß die kontinuierliche Umfangsrille (9) der Kabelrollen (1, 2) der Außenform der Hülsenglieder (10) angepaßt ist, und die Innenform der Hülsenglieder (10) derart ist, daß das Kabel (3), wenn es mit Hülsengliedern (10) über eine Kabelrolle (1, 2) läuft, ohne Knicken nicht weiter gebogen werden kann als einem konstanten Radius entspricht, der gleich dem Radius des Grundes der Umfangsrille in den Kabelrollen plus der größten Rippendicke des Hülsengliedes (10) an der Stelle ist, an der das jeweilige Mitnahmeglied befestigt ist.

2. Förderer nach Anspruch 1, in welchem das untere Ende des Förderers zum Zuführen des Schüttgutes angeordnet ist, wofür die Verkleidung (5) mit Zugangsöffnungen für das Schüttgut versehen ist, dadurch gekennzeichnet, daß angrenzend an die am unteren Ende angeordnete Rücklaufrolle (2) zwei weitere Förderer (16, 17) ähnlichen Typs vorgesehen sind, deren obere Rollen mit ihren Wellen mit der Welle der genannten Rücklaufrolle (2) gekuppelt sind, wobei die weiteren Förderer (16, 17) in entgegengesetzter Richtung mit Bezug auf die Achse des ersterwähnten Förderers geneigt sind, welche Neigung verstellbar ist, und wobei angrenzend an die Rücklaufrollen der am unteren Ende angeordneten weiteren Förderer zwei Schraubenförderer (13, 14) mit links- und rechtsgängigen Steigungen oder andere, in entgegengesetzter Richtung arbeitende Grabvorrichtungen vorgesehen sind.

## Revendications

1. Transporteur pour matières en vrac comprenant un câble flexible sans fin (3) sur lequel sont fixés des éléments d'entraînement (4), une poulie d'entraînement (1) et au moins une poulie de renvoi (2), lesquelles poulies (1, 2) sont réalisées sous la forme de poulies à câble qui présentent une gorge circonférentielle continue (9), et une enveloppe tubulaire et/ou en auget (5) dans laquelle les éléments d'entraînement (4) peuvent être entraînés par le câble (3), exactement ajustés mais libres, lesquels éléments d'entraînement (4) sont munis chacun d'une fente radiale droite (11) qui part de l'endroit où ils sont fixés au câble (3), laquelle fente (11) possède une largeur légèrement supérieure à l'épaisseur des poulies à câble (1, 2), caractérisé en ce que le câble (3) est muni sur toute sa longueur d'éléments manchons adjacents (10) fixés rigidement au câble (3), certains prédéterminés, desdits éléments manchons (10) étant munis chacun de l'un desdits éléments d'entraînement (4), chacun de ces éléments étant fixé rigidement et bloqué axialement par rapport à l'élément manchon (10) correspondant, et en ce que la gorge circonférentielle continue (9) des poulies à câble (1, 2) est adaptée à la forme extérieure des éléments manchons (10) tandis que la forme intérieure des éléments manchons (10) est telle que, lorsque le câble (3) muni des éléments manchons (10) passe sur une poulie à câble (1, 2), le câble (3) soit exempt de pliures et ne peut pas s'incurver avec un rayon inférieur à un rayon constant qui est égal au rayon du fond de la gorge circonférentielle des poulies à câble additionné de l'épaisseur maximum de la paroi de l'élément manchon (10), épaisseur considérée à l'endroit où son élément d'entraînement respectif est fixé.

2. Transporteur selon la revendication 1, dans lequel l'extrémité inférieure du transporteur est agencée pour acheminer les matières en vrac, l'enveloppe (5) étant à cet effet munie d'ouvertures d'accès pour les matières en vrac, caractérisé en ce que, dans la région adjacente à la poulie de renvoi (2), située à l'extrémité inférieure, sont prévus deux autres transporteurs (16, 17) d'un type analogue et dont les arbres des poulies supérieures sont accouplés à l'arbre de ladite poulie de renvoi (2), les autres transporteurs (16, 17) étant inclinés l'un en sens inverse de l'autre par rapport à l'axe du transporteur mentionné en premier, ladite inclinaison étant réglable, et dans lequel, dans la région adjacente au poulies de renvoi des autres transporteurs, situées à l'extrémité inférieure, sont prévus deux transporteurs à vis (13, 14) possédant des pas à gauche et à droite, ou d'autres dispositifs d'extraction qui travaillent l'un en sens inverse de l'autre.

fig-2

fig-1

fig-3

fig-4

fig-6

fig-5

0 055 879

fig-7

4